# EUROPÄISCHE PATENTSCHRIFT

(11) **EP 0 739 955 B1**
(45) Veröffentlichungstag und Bekanntmachung des Hinweises auf die Patenterteilung: **14.10.1998**
(21) Anmeldenummer: 96106239.5
(22) Anmeldetag: 20.04.1996
(51) Int. Cl.: C09D 9/00, C23G 1/20

(54) **Verfahren zur Entfernung von verunreinigenden Beschichtungen von Metalloberflächen**
Method for removing contaminating coatings from surfaces
Procédé d'enlèvements de revêtements contaminants de surfaces métalliques

(30) Priorität: 25.04.1995 DE 19515086
(43) Veröffentlichungstag der Anmeldung: 30.10.1996
(73) Patentinhaber: Celanese GmbH, 60439 Frankfurt (DE)
(72) Erfinder: Heymanns, Peter, Dr., 45147 Essen (DE); Kascha, Waldemar, 46147 Oberhausen (DE); Prött, Ernst, Dr., 46147 Oberhausen (DE); Scholz, Horst, 46485 Wesel (DE)

(56) Entgegenhaltungen:
- EP-A- 0 423 635
- EP-A- 0 518 634
- DE-A- 1 546 126
- DE-A- 1 621 581
- DE-A- 3 005 322
- GB-A- 876 681
- US-A- 2 710 843

## Beschreibung

Die Erfindung betrifft ein Verfahren zur Entfernung von verunreinigenden Beschichtungen von Metalloberflächen, indem die zu reinigende Metalloberfläche mit einer wäßrigen alkalischen Lösung in Kontakt gebracht wird.

In Zeiten gesteigerten Umweltbewußtseins kommt dem Recycling gebrauchter Materialien eine wachsende Bedeutung zu. So spielt beispielsweise in der metallverarbeitenden Industrie für die Herstellung von metallischem Zinn nicht nur die Verhüttung von Zinnerzen eine wesentliche Rolle, sondern auch die Wiedergewinnung des Metalls aus Abfällen von verzinntem Eisenblech, dem sogenannten Weißblech, oder verzinnten eisenhaltigen Legierungen.

Diese in Form verschiedenster Gebrauchsgüter zum Einsatz gelangenden Materialien sind jedoch nach einer Nutzung z.B. als Verpackungs- oder Gebindematerial mit zahlreichen Verunreinigungen kontaminiert, die von stark haftenden Lack- bzw. Kunstharzbeschichtungen unterschiedlicher Zusammensetzung bis hin zu Öl- und Fettbestandteilen reichen. Werden derartige verunreinigende Beschichtungen nicht oder nur unzureichend entfernt, so behindern sie die oxidative Ablösung des Zinns von der metallischen Oberfläche in der elektrolytischen Entzinnungsstufe. Aus der daraus resultierenden schlechten Entzinnung folgt zwangsweise auch eine geringere Qualität des Eisenschrotts.

Da dieser Eisenschrott üblicherweise der Verhüttung zugeführt wird, um auch für das Eisen eine erneute Nutzung zu ermöglichen, ist es essentiell, die verunreinigenden Beschichtungen vollständig zu entfernen, denn halogenhaltige Zusatzstoffe der Beschichtungen führen während der Schmelzprozesse der Verhüttung erfahrungsgemäß zur Dioxinbildung.

Aus DE 1 546 126 und DE 1 621 581 ist bekannt, daß zur Entfernung von Lackschichten von Weißblech wäßrige Lösungen eingesetzt werden, die neben Natriumhydroxid und/oder Natriumcarbonat monoalkylierte Polyalkylenglykolether der allgemeinen Formel R'-O-[CH₂-CHR"-O⁆_{y}H enthalten, wobei R' einen Alkyl-, Aryl-, Alkaryl- oder Aralkylrest und R" einen Methyl- oder Ethylrest oder Wasserstoff bedeuten und y eine beliebige Zahl von 1 bis 25 ist.

Das lackierte Weißblech wird mit den genannten Lösungen bei Temperaturen zwischen 50 und 100°C behandelt. Die Entlackung erfolgt dabei entweder im Rahmen eines zweistufigen oder eines einstufigen Entzinnungsverfahrens. Beim zweistufigen Verfahren werden die lackierten Weißblechabfälle zuerst mit der zur Entlackung dienenden Lösung behandelt. Anschließend erfolgt in der zweiten Stufe die alkalische Entzinnung in Gegenwart von Oxidationsmitteln sowie die Elektrolyse der Stannatlösungen zur Wiedergewinnung des Zinns. Die notwendige Entlackungszeit beträgt einige Stunden. Im einstufigen Verfahren werden die Entlackung sowie die Entzinnung gleichzeitig durchgeführt. Nachteilig ist auch bei diesem Verfahren die lange Entlackungszeit von 2 und mehr Stunden.

EP-A-42 36 35 beschreibt zum Entlacken von Metallen ein nichtwäßriges Entlackungsmittel, das als Hauptanteil vorzugsweise 50 - 95 % der Zusammensetzung Polyethylenglykoldiether der allgemeinen Formel Y(̵O-CHCR)-CH₂)̵ₙOX enthält, wobei R Wasserstoff, Methyl- oder Ethyl, X und Y Alkylreste mit 1 bis 10 Kohlenstoffatomen und n eine ganze Zahl zwischen 1 bis 100 bedeuten. Ferner enthält das beschriebene Entlackungsmittel anorganische Basen, z.B. Alkalihydroxid oder organische Basen, z.B. Alkalialkoholate oder Alkanolamine in einer Menge von 1 - 10 % der Zusammensetzung sowie einen Lösungsvermittler, z.B. Polyalkylenglykole und/oder deren Monoether in einer Menge von bis zu 40 %, vorzugsweise 5 - 20 % der Zusammensetzung. Zur Behandlung mit dem Entlackungsmittel werden die zu reinigenden Metallbleche in das Entlackungsmittel bei einer Temperatur von 20 - 90°C über einen Zeitraum von 1 - 25 Minuten eingetaucht.

Aufgabe der vorliegenden Erfindung ist es somit, ein Verfahren zur Verfügung zu stellen, mit dem die verschiedensten verunreinigenden Beschichtungen schnell und vollständig von Metalloberflächen entfernt werden können.

Gelöst wird diese Aufgabe durch ein Verfahren zur Entfernung verunreinigender Beschichtungen von Metalloberflächen, bei dem die zu reinigende Metalloberfläche mit einer wäßrigen alkalischen Lösung in Kontakt gebracht wird, dadurch gekennzeichnet, daß die wäßrige alkalische Lösung als Additiv 0,5 - 10 Gew.-%, bezogen auf die wäßrige alkalische Lösung, mindestens einer Verbindung der Formel (I)

R¹-O(̵CH₂-CHR³-O)̵ₓR² (I)

enthält, wobei R¹ und R² gleich oder verschieden sind und eine C₁ - C₁₅-Alkylgruppe bedeuten, R³ Wasserstoff oder eine Methylgruppe darstellt und x eine ganze Zahl von 1 bis 25 ist.

Im erfindungsgemäßen Verfahren können Metalloberflächen, insbesondere die von Weißblechabfällen, mit den unterschiedlichsten Beschichtungen eingesetzt werden. Beispiele für mögliche Beschichtungen sind Lacke auf der Basis von Polyurethanen, Polyestern, Polyvinylchlorid, Epoxidharzen, Phenolharzen, Alkydharzen, modifizierten Alkydharzen oder Mischharzen (mit oder ohne Pigment). Wurde das Weißblech zuvor als Verpakkungs- oder Gebindematerial eingesetzt, so kann die Dichte der Lackbeschichtung durchaus im mm-Bereich liegen.

Die zur Entlackung eingesetzte wäßrige alkalische Lösung enthält eine starke Base. Es können beispielsweise Alkali- oder Erdalkalihydroxide, Alkali- oder Erdalkalicarbonate oder stark basische Stickstoffverbindungen, wie höhere Amine, eingesetzt werden. Bevorzugt werden Alkalihydroxide und -carbonate verwendet, insbesondere Natriumhydroxid und Natriumcarbonat.

Die der wäßrigen alkalischen Entlackungslösung als Additive zugesetzten Polyalkylenglykolether stellen Verbindungen der allgemeinen Formel I

R¹ - O (̵ CH₂ - CHR³ - O )̵ₓR² I

dar, wobei R¹ und R² gleich oder verschieden sind und eine C₁ - C₁₅-Alkylgruppe bedeuten, R³ Wasserstoff oder eine Methylgruppe darstellt und x eine ganze Zahl von 1 bis 25 ist.

Als Alkylreste R¹ und R² kommen beispielsweise Methyl-, Ethyl-, Propyl-, i-Propyl-, n-Butyl-, i-Butyl-, Pentyl-, i-Pentyl-, Octyl-, 2-Ethylhexyl-, Decyl- und Dodecyl- bis Pentadecylgruppen zum Einsatz.

Bevorzugt werden in den Entlackungslösungen Polyalkylenglykolether verwendet, bei denen R¹ und R² gleich oder verschieden sind und einen C₁ - C₈-Alkylrest bedeuten, R³ Wasserstoff oder eine Methylgruppe darstellt und x eine ganze Zahl von 3 bis 15 ist. Insbesondere werden Polyethylenglykoldimethylether und Polypropylenglykoldimethylether eingesetzt, wobei x eine ganze Zahl von 3 bis 15 ist.

Höhere Polyalkylenglykolether, d.h. solche, bei denen x eine ganze Zahl von 3 bis 15 ist, weisen neben ihrer hohen Entlackungsfähigkeit auch noch den umwelttechnisch hoch einzuschätzenden Vorteil einer nur geringen Flüchtigkeit auf.

Die zur Entfernung der verunreinigenden Beschichtungen vorgesehene Lösung enthält üblicherweise 1,5 - 12,5 Gew.-%, vorzugsweise 5 - 12 Gew.-% und insbesondere 10 - 11,5 Gew.-% der Base sowie 0,5 - 10 Gew.-%, vorzugsweise 0,5 - 7 Gew.-% und insbesondere 1 - 5 Gew.-%, jeweils bezogen auf die wäßrige alkalische Lösung, mindestens einer Verbindung der Formel I R¹-O(̵CH₂-CHR³-O)̵ₓR², wobei R¹, R², R³ und x alle zuvor genannten Bedeutungen haben können.

In einer weiteren Ausführungsform wird die zu reinigende Metalloberfläche mit einer wäßrigen alkalischen Lösung in Kontakt gebracht, die 1 - 10 Gew.-%, bezogen auf die wäßrige alkalische Lösung, einer Mischung enthält aus
a) 70 - 99,9 Gew.-%, bezogen auf die Mischung, mindestens einer Verbindung der Formel I

   R¹-O(̵CH₂-CHR³-O)̵ₓR² I

   wobei R¹ und R² gleich oder verschieden sind und eine C₁ - C₁₅-Alkylgruppe darstellen, R³ Wasserstoff oder eine Methylgruppe bedeutet und x eine ganze Zahl von 1 bis 25 ist, und
b) 0,1 - 30 Gew.-%, bezogen auf die Mischung, mindestens einer Verbindung der Formel II

   R¹-O(̵CH₂-CHR³-O)̵ₓH II

   wobei R¹ eine C₁ - C₁₅-Alkylgruppe und R³ Wasserstoff oder eine Methylgruppe darstellt und x eine ganze Zahl von 1 bis 25 ist.

Zur Entlackung wird eine wäßrige alkalische Lösung verwendet, die 1 - 10 Gew.-%, bevorzugt 1 - 7 Gew.-% und insbesondere 1 - 5 Gew.-%, bezogen auf die wäßrige alkalische Lösung, einer Mischung enthält, die
a) 70 - 99,9 Gew.-%, bevorzugt 80 - 99,9 Gew.-% und insbesondere 90 - 99,9 Gew.-%, bezogen auf die Mischung, mindestens einer Verbindung der Formel I

   R¹-O(̵CH₂-CHR³-O)̵ₓR² I

   enthält, wobei R¹ und R² gleich und verschieden sind und eine C₁ - C₁₅-, bevorzugt C₁ - C₈-Alkylgruppe darstellen, R³ Wasserstoff oder eine Methylgruppe bedeutet und x eine ganze Zahl von 1 bis 25, bevorzugt von 3 bis 15 ist, sowie
b) 0,1 - 30 Gew.-%, bevorzugt 0,1 - 20 Gew.-%, insbesondere 0,1 - 10 Gew.-% mindestens einer Verbindung der Formel II

   R¹-O(̵CH₂-CHR³-O)̵ₓH II

   wobei R¹ eine C₁ - C₁₅-, bevorzugt C₁ - C₈-Alkylgruppe, R³ Wasserstoff oder eine Methylgruppe darstellt und x eine ganze Zahl von 1 bis 25, bevorzugt von 3 bis 15 ist.

Eine besonders hohe Entlackungsaktivität zeigen die der wäßrigen alkalischen Lösung als Additive zugesetzten Polyalkylenglykolether der Formel I bzw. der Formeln I und II, wenn sie maximal 50 Gew.-% an Polyalkylenglykolethern mit x < 3 enthalten, wobei R¹, R², R³ alle zuvor genannten Bedeutungen haben.

Die erfindungsgemäß einsetzbaren Polyalkylenglykolether der Formeln I und II sind in bekannter Weise durch Aneinanderlagerung von Ethylen- oder Propylenoxid mit anschließender- endständiger Veretherung der Hydroxygruppen herstellbar.

Zur Entfernung der Beschichtungen von den Metalloberflächen werden diese mit der wäßrigen alkalischen Entlackungslösung in Kontakt gebracht. Es hat sich hierbei als zweckmäßig erwiesen, die Einwirkung der wäßrigen alkalischen Entlackungslösung auf die verunreinigte Metalloberfläche bei erhöhten Temperaturen vorzunehmen, weil dadurch die Einwirkungszeit erheblich herabgesetzt werden kann.

Üblicherweise werden die Metalloberflächen in die Entlackungslösung eingetaucht, die zweckmäßigerweise gleichzeitig gerührt wird. In einer weiteren Ausführungsform werden die Metalloberflächen mit der wäßrigen alkalischen Entlackungslösung besprüht.

Das erfindungsgemäße Verfahren wird üblicherweise bei einer Temperatur von 50 - 90°C, vorzugsweise 60 - 90°C und insbesondere 70 - 80°C durchgeführt. Die zur Ablösung der Beschichtungen notwendige Zeit beträgt einige Minuten.

Beim Aufheizen der wäßrigen additiventhaltenden alkalischen Entlackungslösung kommt es je nach Zusammensetzung der Entlackungslösung gegebenenfalls zur reversiblen Ausbildung einer organischen Phase. Diese Phasentrennung wirkt sich bei der Entfernung der Beschichtungen vorteilhaft aus, da beim Eintauchen des Weißblechs in die Entlackungslösung die oben aufschwimmende organische Phase, die das Entlackungsadditiv enthält, auch schwer zugängliche Stellen des Weißblechs vollständig benetzt.

Bei der Durchführung des erfindungsgemäßen Verfahrens werden die Lacküberzüge derart physikalisch und chemisch beeinflußt, daß die Lacke nach entsprechender Einwirkungszeit aufquellen und sich vom Weißblech lösen. Hierdurch wird somit erreicht, daß die eigentlichen Entzinnungsmedien anschließend ungehindert und voll auf die Zinnauflage der Eisenbleche einwirken können.

Durch Variation der zugesetzten Menge der Polyalkylenglykolether kann das Ablöseverhalten der Lackreste in weiten Grenzen beeinflußt werden, von der plättchenförmigen bis hin zur feinkörnigen Ablösung.

Dem erfindungsgemäßen Verfahren zur Entlackung von verzinnten Metalloberflächen wird üblicherweise eine elektrolytische Entzinnungsstufe in an sich bekannter Weise nachgeschaltet. Entlackung und Entzinnung können jedoch auch gleichzeitig in einem Schritt durchgeführt werden.

Das erfindungsgemäße Entlackungs-Verfahren zeichnet sich somit durch eine schnelle, einfache und vollständige Entfernung der Beschichtungen von den Metalloberflächen aus. Dadurch kann ein im Vergleich zum Stand der Technik erhöhter Durchsatz im Entlackungsverfahren erzielt werden, was auch zu einer höheren Effizienz aller zur Entlackung dienenden Einsatzstoffe führt. Beim Einsatz der so entlackten verzinnten metallischen Materialien im Entzinnungsverfahren werden ausgezeichnete Ausbeuten elektrolytisch wiedergewonnenen Zinns erreicht bei gleichzeitig hoher Eisenschrott-Qualität.

### Beispiele 1a und b

Zu einer 10 %igen wäßrigen Natronlauge-Lösung werden 2,5 Gew.-% (1a) bzw. 5 Gew.-% (1b), bezogen auf die Natronlauge-Lösung, einer Polyethylenglykoldimethylether-Mischung zugesetzt. Die verwendete Polyethylenglykoldimethylether-Mischung enthält
0,5 - 5 Gew.-% Triethylenglykoldimethylether
> 65 Gew.-% Tetraethylenglykoldimethylether
< 25 Gew.-% Pentaethylenglykoldimethylether und
< 5 Gew.-% höhere Polyether,
wobei die Summe der Gew.-% immer 100 ergibt.

Anschließend wird die Temperatur der Lösung auf 80°C erhöht, wobei ab 45°C eine Phasentrennung zu beobachten ist. Anschließend wird ein mit Lackresten auf der Basis von Polyurethanen oder Polyestern behaftetes Weißblechmaterial durch Eintauchen in die Lösung über eine bestimmte Einwirkungszeit von den Lackresten befreit. Die Lösung wird dabei gerührt, so daß eine vollständige Benetzung der Weißblechoberfläche erfolgt.

Nach den in Tabelle 1 angegebenen Einwirkungszeiten erfolgt eine optische Beurteilung des Zustandes der Weißblechoberfläche. Bei Beispiel la haben sich die Lackbeschichtungen bereits nach 3 min überwiegend in plättchenartiger Form von der bereits leicht angeätzten Weißblechoberfläche gelöst. Nach 6 Minuten ist die Oberfläche vollständig frei von anhaftenden Beschichtungen. Bei Beispiel 1b haben sich die Lackbeschichtungen nach 3 Minuten fast vollständig von der bereits leicht angeätzten Weißblechoberfläche gelöst und liegen in feiner Suspension vor.

### Beispiel 2

Zu einer 10 %igen wäßrigen Natronlauge-Lösung werden 5 Gew.-%, bezogen auf die Natronlauge-Lösung, einer Polyethylenglykoldimethylether-Mischung zugegeben, die aus
45 Gew.-% Triethylenglykoldimethylether
35 Gew.-% Tetraethylenglykoldimethylether und
20 Gew.-% Pentaethylenglykoldimethylether
besteht. Die Temperatur der Lösung wird dann auf 80°C erhöht. Anschließend werden die Weißblechabfälle aus Beispiel 1 in die Lösung eingetaucht. Nach 3 Minuten Behandlungsdauer wird eine deutliche Ablösung der Beschichtungen festgestellt, die sich bis zu einer Behandlungsdauer von 10 Minuten nahezu vervollständigt und zu einer fast rückstandslosen Befreiung der Metalloberflächen von Lackbeschichtungen führt.

### Beispiel 3

Die Weißblechabfälle aus Beispiel 1 werden wie in Beispiel 1 beschrieben behandelt, es werden jedoch 5 Gew.-% reiner Triethylenglykoldimethylether, bezogen auf die Natronlauge-Lösung, eingesetzt. Nach 3 Minuten Einwirkungszeit ist eine partielle Ablösung der Beschichtungen vom Weißblech zu beobachten. Nach 10 Minuten hat eine fast vollständige Ablösung der Beschichtungen stattgefunden.

### Beispiel 4

Die Weißblechabfälle aus Beispiel 1 werden wie in Beispiel 1 beschrieben behandelt, es werden jedoch 5 Gew.-% einer Mischung homologer Polyethylenglykoldimethylether, bezogen auf die Natronlauge-Lösung, zugesetzt. Die Polyethylenglykoldimethylether-Mischung enthält dabei
0,1 Gew.-% Dimethylenglykoldimethylether
0,1 Gew.-% Diethylenglykolmonomethylether
36,4 Gew.-% Triethylenglykoldimethylether
13,9 Gew.-% Triethylenglykolmonomethylether
31,4 Gew.-% Tetraethylenglykoldimethylether
3,3 Gew.-% Tetraethylenglykolmonomethylether
11,2 Gew.-% Pentaethylenglykoldimethylether
3,5 Gew.-% Hexaethylenglykoldimethylether und
0,1 Gew.-% höhere Polyether.

Die Ergebnisse sind in Tabelle 1 zusammengestellt.

### Vergleichsversuch 1

Die Weißblechabfälle aus Beispiel 1 werden wie in Beispiel 1 beschrieben behandelt, es werden jedoch 5 Gew.-% des folgenden Gemisches, das 92,5 Gew.-%, bezogen auf das Gemisch, an homologen Polyethylenglykolmonobutylethern und 4,4 Gew.-%, bezogen auf das Gemisch, an homologen Polyethylenglykoldibutylethern enthält, verwendet
3,5 Gew.-% 2-Butoxyethanol
6,4 Gew.-% Diethylenglykolmonobutylether
9,6 Gew.-% Triethylenglykolmonobutylether
12,2 Gew.-% Tetraethylenglykolmonobutylether
13,7 Gew.-% Pentaethylenglykolmonobutylether
13,9 Gew.-% Hexaethylenglykolmonobutylether
13,5 Gew.-% Heptaethylenglykolmonobutylether
10,9 Gew.-% Octaethylenglykolmonobutylether
6,0 Gew.-% Nonaethylenglykolmonobutylether
2,2 Gew.-% Decaethylenglykolmonobutylether
0,6 Gew.-% Undecaethylenglykolmonobutylether
4,4 Gew.-% Di- bis Undecaethylenglykoldibutylether
3,1 Gew.-% n-Butanol

Die mit diesem Gemisch erzielte Entlackung der Weißblechabfälle nach 10 min. Einwirkungszeit (siehe Tabelle 1) ist deutlich schlechter als bei den Beispielen 1 - 4.

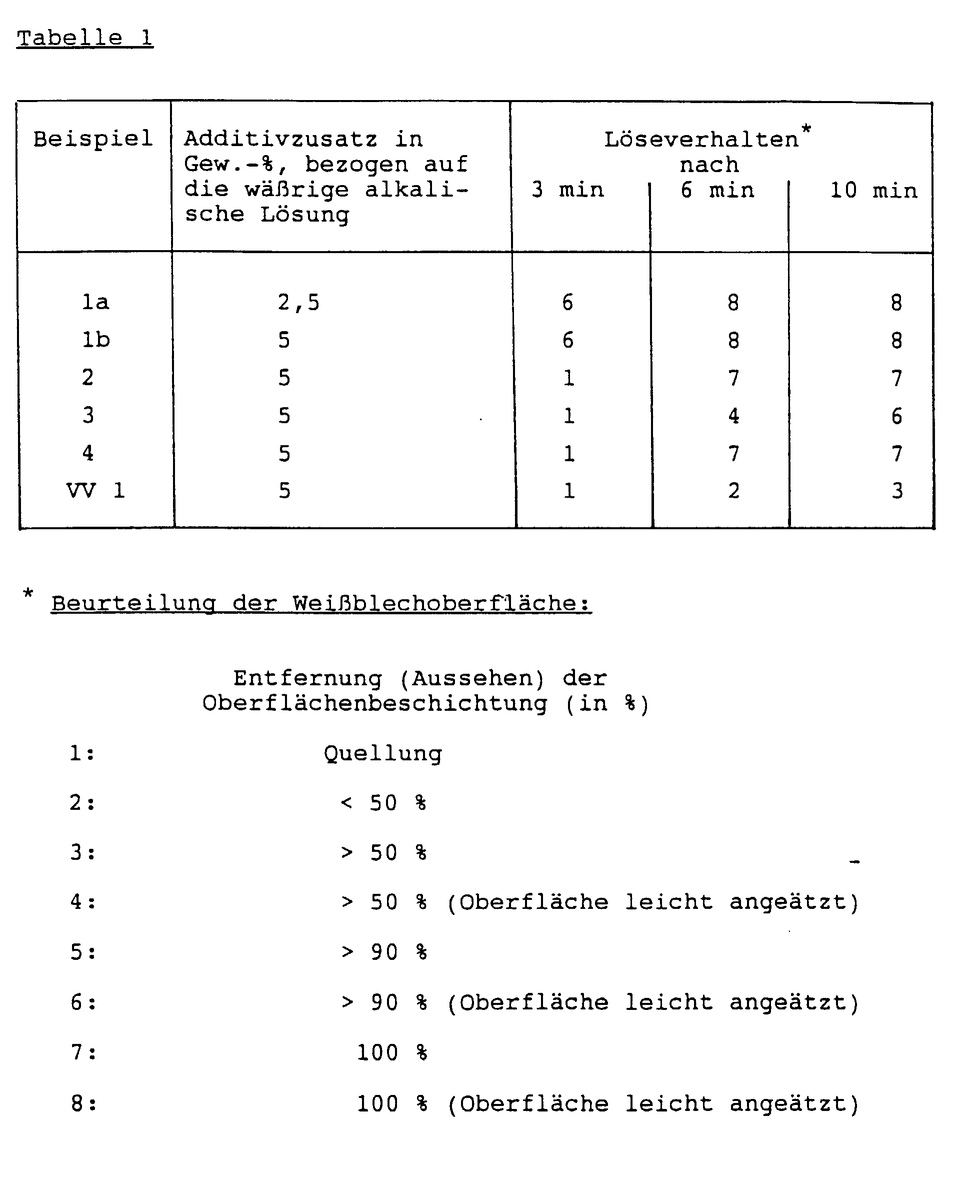

## Patentansprüche

1. Verfahren zur Entfernung verunreinigender Beschichtungen von Metalloberflächen, bei dem die zu reinigende Metalloberfläche mit einer wäßrigen alkalischen additiventhaltenden Lösung in Kontakt gebracht wird, dadurch gekennzeichnet, daß die wäßrige alkalische Lösung als Additiv 0,5 - 10 Gew.-% mindestens einer Verbindung der allgemeinen Formel I
R¹-O(̵CH₂-CHR³-O)̵ₓR²
enthält, wobei R¹ und R² gleich oder verschieden sind und eine C₁ - C₁₅-Alkylgruppe bedeuten, R³ Wasserstoff oder eine Methylgruppe darstellt und x eine ganze Zahl von 1 bis 25 ist.

2. Verfahren nach Anspruch 1, dadurch gekennzeichnet, daß die wäßrige alkalische Lösung 1 - 5 Gew.-%, bezogen auf die wäßrige alkalische Lösung, mindestens einer Verbindung der allgemeinen Formel I enthält.

3. Verfahren nach einem der Ansprüche 1 oder 2, dadurch gekennzeichnet, daß in Formel I R¹ und R² gleich oder verschieden sind und einen C₁ - C₈-Alkylrest bedeuten, R³ Wasserstoff oder eine Methylgruppe darstellt und x eine ganze Zahl von 3 bis 15 ist.

4. Verfahren nach einem oder mehreren der Ansprüche 1 - 3, dadurch gekennzeichnet, daß als Verbindungen der Formel I Polyethylenglykoldimethylether oder Polypropylenglykoldimethylether eingesetzt werden, wobei x eine ganze Zahl von 3 bis 15 ist.

5. Verfahren zur Entfernung verunreinigender Beschichtungen von Metalloberflächen, bei dem die zu reinigende Metalloberfläche mit einer wäßrigen alkalischen additiventhaltenden Lösung in Kontakt gebracht wird, dadurch gekennzeichnet, daß die wäßrige alkalische Lösung 1 - 10 Gew.-%, bezogen auf die wäßrige alkalische Lösung, einer Mischung enthält aus
a) 70 - 99,9 Gew.-%, bezogen auf die Mischung, mindestens einer Verbindung der Formel I
R¹-O(̵CH₂-CHR³-O)̵ₓR² I
wobei R¹ und R² gleich oder verschieden sind und eine C₁ - C₁₅-Alkylgruppe darstellen, R³ Wasserstoff oder eine Methylgruppe bedeutet und x eine ganze Zahl von 1 bis 25 ist, und
b) 0,1 - 30 Gew.-%, bezogen auf die Mischung, mindestens einer Verbindung der Formel II
R¹-O(̵CH₂-CHR³-O)̵ₓH II
wobei R¹ eine C₁ - C₁₅-Alkylgruppe darstellt, R³ Wasserstoff oder eine Methylgruppe bedeutet und x eine ganze Zahl von 1 bis 25 ist.

6. Verfahren nach Anspruch 5, dadurch gekennzeichnet, daß die wäßrige alkalische Lösung 1 - 5 Gew.-%, bezogen auf die wäßrige alkalische Lösung, einer Mischung enthält aus 90 - 99,9 Gew.-%, bezogen auf die Mischung, mindestens einer Verbindung der Formel I und 0,1 - 10 Gew.-%, bezogen auf die Mischung, mindestens einer Verbindung der Formel II.

7. Verfahren nach Anspruch 5 oder 6, dadurch gekennzeichnet, daß in Formel I R¹ und R² gleich oder verschieden sind und einen C₁ - C₈-Alkylrest bedeuten, R³ Wasserstoff oder eine Methylgruppe darstellt, x eine ganze Zahl von 3 bis 15 ist und in Formel II R¹ einen C₁ - C₈-Alkylrest, R³ Wasserstoff oder eine Methylgruppe darstellt und x eine ganze Zahl von 3 bis 15 ist.

8. Verfahren nach einem oder mehreren der Ansprüche 5 - 7, dadurch gekennzeichnet, daß als Verbindungen der Formel I Polyethylenglykoldimethylether oder Polypropylenglykoldimethylether und als Verbindungen der Formel II Polyethylenglykolmonomethylether oder Polypropylenglykolmonomethylether eingesetzt werden, wobei x eine ganze Zahl von 3 bis 15 ist.

9. Verfahren nach einem oder mehreren der Ansprüche 1 - 8, dadurch gekennzeichnet, daß die Einwirkung der wäßrigen alkalischen additiventhaltenden Lösung bei einer Temperatur zwischen 50 und 90°C erfolgt.

10. Verfahren nach einem oder mehreren der Ansprüche 1 - 9, dadurch gekennzeichnet, daß die Metalloberflächen zur Entfernung der verunreinigenden Beschichtungen in die wäßrige alkalische additiventhaltende Lösung eingetaucht werden.

11. Verfahren nach einem oder mehreren der Ansprüche 1 - 10, dadurch gekennzeichnet, daß die zu reinigende Metalloberfläche mit Lacken auf der Basis von Polyurethanen oder Polyestern beschichtet ist.

12. Verwendung einer wäßrigen alkalischen additiventhaltenden Lösung, dadurch gekennzeichnet, daß die wäßrige alkalische Lösung als Additiv 0,5 - 10 Gew.-% mindestens einer Verbindung der allgemeinen Formel I
R¹-O(̵CH₂-CHR³-O)̵ₓR²
enthält, wobei R¹ und R² gleich oder verschieden sind und eine C₁ - C₁₅-Alkylgruppe bedeuten, R³ Wasserstoff oder eine Methylgruppe darstellt und x eine ganze Zahl von 1 bis 25 ist, zur Entfernung verunreinigender Beschichtungen von Metalloberflächen.

13. Verwendung einer wäßrigen alkalischen additiventhaltenden Lösung, dadurch gekennzeichnet, daß die wäßrige alkalische Lösung 1 - 10 Gew.-%, bezogen auf die wäßrige alkalische Lösung, einer Mischung enthält aus
a) 70 - 99,9 Gew.-%, bezogen auf die Mischung, mindestens einer Verbindung der Formel I
R¹-O(̵CH₂-CHR³-O)̵ₓR² I
wobei R¹ und R² gleich oder verschieden sind und eine C₁ - C₁₅-Alkylgruppe darstellen, R³ Wasserstoff oder eine Methylgruppe bedeutet und x eine ganze Zahl von 1 bis 25 ist, und
b) 0,1 - 30 Gew.-%, bezogen auf die Mischung, mindestens einer Verbindung der Formel II
R¹-O(̵CH₂-CHR³-O)̵ₓH II
wobei R¹ eine C₁ - C₁₅-Alkylgruppe darstellt, R³ Wasserstoff oder eine Methylgruppe bedeutet und x eine ganze Zahl von 1 bis 25 ist,
zur Entfernung verunreinigender Beschichtungen von Metalloberflächen.

## Claims

1. A process for removing contaminating coatings from metal surfaces, in which the metal surface to be cleaned is brought into contact with an aqueous alkaline, additive-containing solution, wherein the aqueous alkaline solution comprises as additive 0.5-10% by weight of at least one compound of the formula (I)
R¹-O(̵CH₂-CHR³-O)̵ₓR²
in which R¹ and R² are identical or different and are a C₁-C₁₅-alkyl group, R³ is hydrogen or a methyl group and x is an integer from 1 to 25.

2. The process as claimed in claim 1, wherein the aqueous alkaline solution comprises 1-5% by weight, based on the aqueous alkaline solution, of at least one compound of the formula I.

3. The process as claimed in either of claims 1 and 2, wherein in formula I R¹ and R² are identical or different and are a C₁-C₈-alkyl radical, R³ is hydrogen or a methyl group and x is an integer from 3 to 15.

4. The process as claimed in one or more of claims 1-3, wherein use is made as compounds of the formula I of polyethylene glycol dimethyl ethers or polypropylene glycol dimethyl ethers in which x is an integer from 3 to 15.

5. A process for removing contaminating coatings from metal surfaces, in which the metal surface to be cleaned is brought into contact with an aqueous alkaline, additiv-containing solution, wherein the aqueous alkaline solution comprises 1-10% by weight, based on the aqueous alkaline solution, of a mixture comprising
a) 70-99.9% by weight, based on the mixture, of at least one compound of the formula I
R¹-O(̵CH₂-CHR³-O)̵ₓR² I
in which R¹ and R² are identical or different and are a C₁-C₁₅-alkyl group, R³ is hydrogen or a methyl group and x is an integer from 1 to 25, and
b) 0.1-30% by weight, based on the mixture, of at least one compound of the formula II
R¹-O(̵CH₂-CHR³-O)̵ₓH II
in which R¹ is a C₁-C₁₅-alkyl group, R³ is hydrogen or a methyl group and x is an integer from 1 to 25.

6. The process as claimed in claim 5, wherein the aqueous alkaline solution comprises 1-5% by weight, based on the aqueous alkaline solution, of a mixture comprising 95-99.9% by weight, based on the mixture, of at least one compound of the formula I and 0.1-10% by weight, based on the mixture, of at least one compound of the formula II.

7. The process as claimed in claim 5 or 6, wherein in formula I R¹ and R² are identical or different and are a C₁-C₈-alkyl radical, R³ is hydrogen or a methyl group, x is an integer from 3 to 15 and, in formula II, R¹ is a C₁-C₈-alkyl radical, R³ is hydrogen or a methyl group and x is an integer from 3 to 15.

8. The process as claimed in one or more of claims 5-7, wherein use is made as compounds of the formula I of polyethylene glycol dimethyl ethers or polypropylene glycol dimethyl ethers and, as compound of the formula II, of polyethylene glycol monomethyl ethers or polypropylene glycol monomethyl ethers in which x is an integer from 3 to 15.

9. The process as claimed in one or more of claims 1-8, wherein the action of the aqueous alkaline, additive-containing solution takes place at a temperature of between 50 and 90°C.

10. The process as claimed in one or more of claims 1-9, wherein to remove the contaminating coating the metal surfaces are immersed in the aqueous alkaline, additive-containing solution.

11. The process as claimed in one or more of claims 1-10, wherein the metal surface to be cleaned is coated with coating materials based on polyurethanes or polyesters.

12. The use of an aqueous alkaline, additive-containing solution, wherein the aqueous alkaline solution comprises as additive 0.5-10% by weight of at least one compound of the formula (I)
R¹-O(̵CH₂-CHR³-O)̵ₓR²
in which R¹ and R² are identical or different and are a C₁-C₁₅-alkyl group, R³ is hydrogen or a methyl group and x is an integer from 1 to 25, for removing contaminating coatings from metal surfaces.

13. The use of an aqueous alkaline, additive-containing solution, wherein the aqueous alkaline solution comprises 1-10% by weight, based on the aqueous alkaline solution, of a mixture comprising
a) 70-99.9% by weight, based on the mixture, of at least one compound of the formula I
R¹-O(̵CH₂-CHR³-O)̵ₓR² I
in which R¹ and R² are identical or different and are a C₁-C₁₅-alkyl group, R³ is hydrogen or a methyl group and x is an integer from 1 to 25, and
b) 0.1-30% by weight, based on the mixture, of at least one compound of the formula II
R¹-O(̵CH₂-CHR³-O)̵ₓH
in which R¹ is a C₁-C₁₅-alkyl group, R³ is hydrogen or a methyl group and x is an integer from 1 to 25, for removing contaminating coatings from metal surfaces.

## Revendications

1. Procédé pour retirer des revêtements contaminants de surfaces métalliques dans lequel la surface métallique à nettoyer est mise en contact avec une solution alcaline aqueuse contenant un additif, caractérisé en ce que la solution alcaline aqueuse contient comme additif 0,5 à 10 % en masse d'au moins un composé de formule générale I 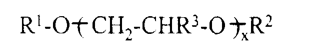 où R¹ et R² sont identiques ou différents et représentent un groupe alkyle en C₁-C₁₅, R³ représente l'hydrogène ou un groupe méthyle et x représente un nombre entier de 1 à 25.

2. Procédé selon la revendication 1, caractérisé en ce que la solution alcaline aqueuse contient 1 à 5 % en masse, par rapport à la solution alcaline aqueuse, d'au moins un composé de formule générale I.

3. Procédé selon l'une des revendications 1 et 2, caractérisé en ce que, dans la formule I, R¹ et R² sont identiques ou différents et représentent un reste alkyle en C₁-C₈, R³ représente l'hydrogène ou un groupe méthyle et x représente un nombre entier de 3 à 15.

4. Procédé selon une ou plusieurs des revendications 1 à 3, caractérisé en ce que l'on utilise comme composés de formule I des polyéthylèneglycoldiméthyléthers ou des polypropyléneglycoldiméthyléthers, x étant un nombre entier de 3 à 15.

5. Procédé pour retirer des revêtements contaminants de surfaces métalliques dans lequel la surface métallique à nettoyer est mise en contact avec une solution alcaline aqueuse contenant un additif, caractérisé en ce que la solution alcaline aqueuse contient 1 à 10 % en masse, par rapport à la solution alcaline aqueuse, d'un mélange de
a) 70 - 99,9 % en masse, par rapport au mélange, d'au moins un composé de formule I 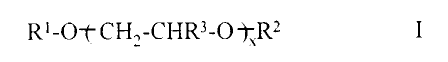 où R¹ et R² sont identiques ou différents et représentent un groupe alkyle en C₁-C₁₅, R³ représente l'hydrogène ou un groupe méthyle et x représente un nombre entier de 1 à 25, et
b) 0,1 - 30 % en masse, par rapport au mélange, d'au moins un composé de formule II 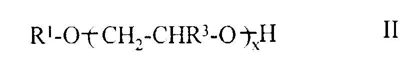 où R¹ représente un groupe alkyle en C₁-C₁₅, R³ représente l'hydrogène ou un groupe méthyle et x représente un nombre entier de 1 à 25.

6. Procédé selon la revendication 5, caractérisé en ce que la solution alcaline aqueuse contient 1 à 5 % en masse, par rapport à la solution alcaline aqueuse, d'un mélange de 90 à 99,9 % en masse, par rapport au mélange, d'au moins un composé de formule I et de 0,1 à 10% en masse, par rapport au mélange, d'au moins un composé de formule II.

7. Procédé selon la revendication 5 ou 6, caractérisé en ce que, dans la formule I, R¹ et R² sont identiques ou différents et représentent un reste alkyle en C₁-C₈, R³ représente l'hydrogène ou un groupe méthyle, x représente un nombre entier de 3 à 15 et, dans la formule II, R¹ représente un reste alkyle en C₁-C₈, R³ représente l'hydrogène ou un groupe méthyle et x représente un nombre entier de 3 à 15.

8. Procédé selon une ou plusieurs des revendications 5 à 7, caractérisé en ce que l'on utilise comme composés de formule I des polyéthylèneglycoldiméthyléthers ou des polypropylèneglycoldiméthyléthers et comme composés de formule II des polyéthylèneglycolmonométhyléthers ou des polypropylèneglycolmonométhyléthers, x étant un nombre entier de 3 à 15.

9. Procédé selon une ou plusieurs des revendications 1 à 8, caractérisé en ce que l'action de la solution alcaline aqueuse contenant un additif a lieu à une température comprise entre 50 et 90°C.

10. Procédé selon une ou plusieurs des revendications 1 à 9, caractérisé en ce que les surfaces métalliques sont plongées dans la solution alcaline aqueuse contenant un additif pour retirer les revêtements contaminants.

11. Procédé selon une ou plusieurs des revendications 1 à 10, caractérisé en ce que la surface métallique à nettoyer est recouverte de peintures à base de polyuréthanes ou de polyesters.

12. Utilisation d'une solution alcaline aqueuse contenant un additif, caractérisée en ce que la solution alcaline aqueuse contient comme additif 0,5 à 10 % en masse d'au moins un composé de formule générale I 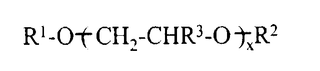 où R¹ et R² sont identiques ou différents et représentent un groupe alkyle en C₁-C₁₅, R³ représente l'hydrogène ou un groupe méthyle et x représente un nombre entier de 1 à 25, pour retirer des revêtements contaminants de surfaces métalliques.

13. Utilisation d'une solution alcaline aqueuse contenant un additif, caractérisée en ce que la solution alcaline aqueuse contient 1 à 10 % en masse, par rapport à la solution alcaline aqueuse, d'un mélange de
a) 70 à 99,9 % en masse, par rapport au mélange, d'au moins un composé de formule I 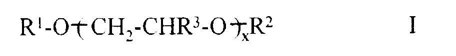 où R¹ et R² sont identiques ou différents et représentent un groupe alkyle en C₁-C₁₅, R³ représente l'hydrogène ou un groupe méthyle et x est un nombre entier de 1 à 25, et
b) 0,1 à 30 % en masse, par rapport au mélange, d'au moins un composé de formule Il 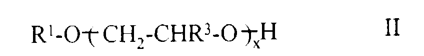 où R¹ représente un groupe alkyle en C₁-C₁₅, R³ représente l'hydrogène ou un groupe méthyle et x est un nombre entier de 1 à 25,
pour retirer des revêtements contaminants de surfaces métalliques.
